# EUROPEAN PATENT APPLICATION

(11) **EP 0 680 029 A1**
(43) Date of publication of application: **02.11.1995**
(21) Application number: 95201063.5
(22) Date of filing: 25.04.1995
(51) Int. Cl.: G09B 9/05

(54) **System for simulating an environment for an observer which is able to move through said environment along a predetermined route**

(30) Priority: 25.04.1994 NL 9400661
(71) Applicant: FOKKER SPACE & SYSTEMS B.V., NL-1117 ZJ Schiphol-Oost (NL)
(72) Inventor: Siegel, Aron Wolf, NL-1186 XG Amstelveen (NL)
(74) Representative: de Bruijn, Leendert C.

(57) **Abstract**

System for simulating the environment of an observer comprising: a) means for influencing the direction and velocity with which the observer moves, b) means for visualizing the environment, c) means for registering the environment by means of a camera which during the registration moves along said predetermined route, d) means for defining a three-dimensional virtual space and for projecting real present objects in this space, e) means for generating dynamical and/or statical objects in said three-dimensional space, f) means for projecting the three-dimensional objects into a two-dimensional image, and g) means for combining the two dimensional projections with the two-dimensional environment, which combined data can be used by the display means.

## Description

The invention relates to a system for simulating the environment of an observer which is able to move through said environment along a predetermined route, comprising:
1) first means enabling the observer to influence the direction and velocity with which the observer moves along said predetermined route,
2) second means for visualizing the environment synchronously with the momentaneous position, direction and velocity of the observer along said route.

Such systems are known as such and are for instance applied in computer games. However, the invention is not directed to games, but to systems for simulating a real environment whereby on the one hand a display of this environment true to the original is important, whereas on the other hand the system should have the possibility to temporarily change the environment at least partly by visualizing statical or dynamical objects therein.

In the pending state of the art simulation systems are using in general complete images generated by computers. For that purpose a database comprising data of the environment to be simulated is built. Even if the environment to be simulated is memorized with high resolution in the database, nevertheless in the ultimately simulated images a lot of details are lost in comparison with the real world. In the most modern simulation systems structure colouring can be applied to enhance the sense of reality. Such simulation systems need large memories and very fast operating processors to enable a "real time" simulation. In practice, it is proven that such systems are flexible but also very expensive, in the order of tens of millions of guilders. Furthermore, the lack of detail still is a significant disadvantage.

A traditional form of simulation is the use of film or video, whereby no or hardly any details are lost. The disadvantage of film or video (memorized on cd-rom, laser disc, or on video tape or film strip, or similar) is the very restrictive interaction possibility. With such simulation systems only the film display speed can be varied, in other words the velocity with which the observer is moving through the environment. There are no possibilities to temporarily change the environment.

The object of the invention is now to use film or video information for displaying those parts of the environment which during the simulation do not need to be changed, combined with computer generated movable or non-movable graphic objects which in each simulation session can be different and within a simulation session can be adapted or amended. In other words, the invention relates to a combination of both types of simulation training systems, resulting into an interactive system with a very high sense of reality enabling operation in real time. The restriction of the system is that the movement of the observer is bounded to said route. This restricts the application possibilities mainly to vehicles which are moving along railtracks such as a tram, speed tram, metro, and train. In the further description reference will be made to these simulators as R.I.T. simulators (Real-time Interactive Traject simulator).

The invention now provides a system for simulating the environment of an observer which is able to move through said environment along a predetermined route, comprising:
a) first means enabling the observer to influence the direction and velocity with which the observer moves along said predetermined route,
b) second means for visualizing the environment synchronously with the momentaneous position, direction and velocity of the observer along said route,
characterized in that the system furthermore uses:
c) third means for registering the environment by means of a camera which during the registration moves along said predetermined route,
d) fourth means for defining a three-dimensional virtual space by reconstructing the spatial coordinates of selected objects in the environment which are visible from predetermined positions along said route in the registered environment, based on the dimensions measured in the registration and the corresponding real dimensions which are considered known, and for determining the camera standpoint in the three-dimensional space,
e) fifth means for generating interactive dynamical and/or statical objects in said three-dimensional space,
f) sixth means for constructing a two-dimensional mathematical projection of each generated object from the camera standpoint in the three-dimensional space, and
g) seventh means for combining the two dimensional projections of the interactive objects generated by the sixth means and the two-dimensional environment registered by the third means, which combined data can be used by the display means mentioned under b).

As initial step for realizing an R.I.T. simulator the route is registered on film or video using the third means mentioned under c). Preferably this is done at times at which no other traffic or other moving objects are present in the environment, so that mainly or exclusively statical objects will be registered on the film. A restricted number thereof is essential for the definition of the route, and these essential statical objects are indicated as ROUTE OBJECTS. Typical route objects in rail simulators are signalling posts, sleepers, and overhead wire posts. Furthermore, there are statical objects in the film which are significant for the environment such as buildings, platforms, etc. These objects are indicated by the term ENVIRONMENTAL OBJECTS. Both the route objects as well as the environmental objects are registered on the film or video.

In addition, the system uses INTERACTIVE OBJECTS in the form of three-dimensional (3D) images of dynamical and statical objects such as vehicles, cyclists, pedestrians, passengers, signalling posts, traffic lights, etc., generated by the fifth means mentioned above under e). These interactive objects are not present in the recorded reality and are therefore not present on the film or video of the route. The interactive objects are generated by means of computer software. By integrating the 3D-computer images of the interactive objects with the film images of the route, using the seventh means, mentioned above under g), the desired simulation is obtained real-time and synchronously.

To enable a real-time integration with a strong sense of reality it is necessary to project the 3D-computer images at the correct place and with the correct perspective in the film. For that purpose an offline preparation phase is necessary whereby use is made of the fourth means, mentioned above under d), to determine a virtual 3D-space of which the origin of coordinates corresponds with the origin of the real 3D-space which is in a two-dimensional sense registered by the camera. In this phase one or more route objects on a film or video frame are measured. The measuring data retrieved from the film of video are compared with the real dimensions of the respective route objects, (for instance using the cadastral surveyed data about this route object) and this comparison provides sufficient data to determine in the virtual 3D-space a reconstructed virtual 3D route object of which the 3D-position in relation to the virtual 3D-origin is determined. This 3D route object is not made visible and therefore consists only in the computer memory. This operation is repeated for several route objects until a sufficient number of virtual 3D route objects is obtained. These measurements are of essential importance for determining the camera position. Some interpolation is possible, but in case in the final product erroneous perspective 2D-images are obtained then that section of the film should be remeasured or measured additionally to obtain the right camera position in the 3D-space.

The 3D route objects and their 3D-positions calculated from various measurements of their 2D-images (on film or video) together provide a virtual geometrical reconstruction of the route in a 3D-coordinate system. This coordinate system is called the virtual coordinate system and this system is equivalent with the selected coordinate system of the reality (such as a Cartesian coordinate system or a spherical coordinate system), whereby the origins of both systems correspond. The virtual geometrical 3D route reconstruction is not made visible and consists only in the computer memory. All 3D-positions of all 3D route objects and the eventual 3D-environmental objects are absolute in the virtual coordinate system. The 3D^{recon}-camera position in this virtual coordinate system and the 3D^{f}-camera position are identical and correspond to the camera position during the recording of the route.

Preferably paths of 3D-coordinates are defined for the dynamical interactive objects in the above-described virtual 3D-space, which paths correspond with for instance roads, pavements, footpaths, etc., in the real environment. The dynamical interactive objects such as vehicles, cyclists, dogs, pedestrians, etc., are then able to move with independently programmable velocities and characteristics along said defined paths. Please note, that it is not necessary to predefine such paths of movement. In the extreme case it is sufficient to indicate those positions in the virtual three-dimensional space where the dynamical object is not allowed to be because there is another object present, such as a building, a overhead wiring post or another dynamical object.

This concludes the offline preparation phase and real-time integration of images is now possible. A (standard) software program takes care of the correct respective 2D-projection of the selected statical interactive objects (signalling objects, traffic lights) and the dynamical interactive objects (vehicles, cyclists, passengers getting in or out, etc.) in the preregistered video or film recording of the route. The 3D route and environmental objects which together form the virtual 3D route reconstruction are not made visible and the film images are available with all their details.

The attention is drawn to the article "Le simulateur de conduite de train pour faire face à l'urgence", published in La Recherche, 20 (1989) September, No. 213, wherein a train simulator is described in which video images are used to present the environment to the driver to be trained. From the rather superficial description one could learn that the system comprises an image database containing images which could be inserted into the normal sequence of images to simulate for instance the change of signalling lights, etc. Nothing, however, is said about the creation of a virtual 3D environment and the generation of virtual route objects and interactive objects as is described in this application.

A very similar system is described in the Japanese specification J4-13175.

Another prior art system in which video sequences are used to generate the environment for a driver to be trained, especially the driver of an automobile, is described in WO-9111792. The simulation possibilities of this system are, however, very restricted. Two possibilities are described, one in which the driver to be trained sees his own vehicle in the projected real environment, and the other in which the projected environment is enframed, such that the driver to be trained gets the impression of sitting inside the vehicle. Nothing, however, is said about creating route objects and interactive objects using a virtual 3D-space as described in underlying application.

Figure 1 illustrates a film or video frame as recorded during the registration of the environment.

Figure 2 illustrates a visual image of the recorded environment with superposed therein the 2D-image of a vehicle.

Figure 3 illustrates a similar image as figure 2 but at a later moment in time.

Figure 4 illustrates an image of the recorded environment with superposed therein the 2D-image of a signalling post.

Figure 5 illustrates a perspective schematical view of a practical embodiment of the simulator whereby the system according to the invention is applied.

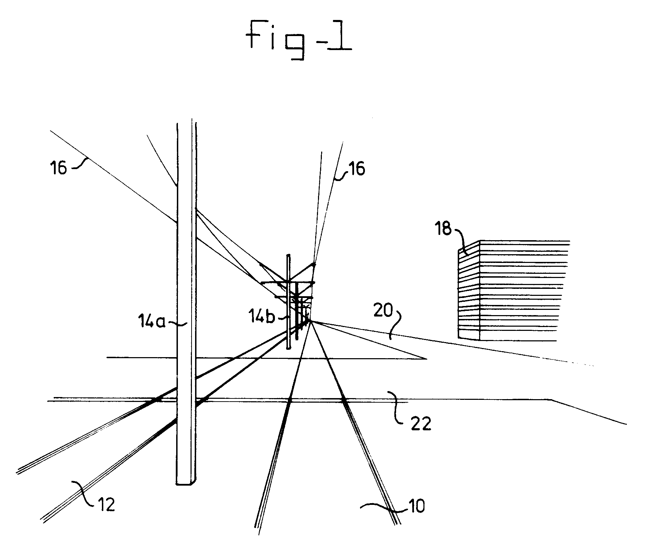

Figure 1 illustrates a film or video frame as recorded during the registration of the environment. Shown is very schematically a railtrack section 10 along which the observer is able to move. At the left-hand side there is a further railtrack section 12 for traffic in the opposite direction. Along the route poles 14a...14n are positioned at regular distances carrying the overhead wire 16. These poles 14a...n are forming the so-called route objects. Furthermore, a building 18 is visible in the figure, which building forms one of the environmental objects. Very schematically furthermore a road 20 parallel to the railtrack section 12 is shown as well as a connecting road 22 which crosses the railtrack section. It will be clear that in reality a lot more environmental objects may be visible on the film, such as further buildings, roads, pavements, street furniture, road markings, etc. For the sake of simplicity only a small part thereof is indicated in figure 1.

After registering the whole route by means of film or video images as illustrated in figure 1 in a part of these images the dimensions of selected route objects, which are present on these images, are measured. As already mentioned above shortly these route objects are for instance the overhead wire poles 14a...n, or eventually the sleepers carrying the rails, which sleepers are not illustrated in detail in figure 1. In a preferred embodiment of the invention in a number of video frames the length of the overhead wire poles is measured. The length of these overhead wire poles can be found as cadastral data. In other words, the real length of the selected overhead wire poles is known from the cadastral survey data and in many cases these data can be supplied in the form of a data file, so that measurements in the real environment are superfluous. (In case the data are available, then of course they have to be measured in the real environment, whereby one could assume that all poles have the same length). So, in a film frame one overhead wire pole is measured, which pole should be completely visible in said frame. The pole 14b is suitable for this purpose in figure 1. This operation can be repeated for a number of other film frames and by means of the measured length and the real length, known from the cadastral survey data, the 3D-position of the pole in relation to the camera can be calculated. The algorithm used for this purpose, is based on the fact that the perspective projection of the overhead wire pole will decrease as the distance in relation to the camera is increased. On the basis of various images of overhead wire poles in this way a reconstruction of these poles in the virtual 3D-space is created whereby also the standpoint and the orientation of the camera in this space is determined.

After determining the 3D-positions of a number of route objects in one film frame as well as determining their standpoint and orientation in relation to the camera position, the next step has to be carried out.

In this step the camera position itself is determined by, for each film frame, deriving said position from the 3D-coordinates and the dimensions of two route objects in this film frame in the virtual 3D-space. So, for each film frame the 3D-positions of two route objects in the virtual 3D-space are taken as starting point for the calculation of the camera position for that film frame in 3D-coordinates in the virtual 3D-space.

Essentially this calculation has to be repeated for each individual film image, but by using interpolation methods it is sufficient to carry out the calculations for a restricted number of film images.

After creating in this manner a virtual 3D-space it is possible to create in this space one or more interactive dynamical objects and to move these objects through the space by means of software which is known as such. Such an object may have for instance the shape of a three-dimensionally defined vehicle, of which the movements through the three-dimensional space can be controlled, for instance using a joystick connected to the computer or using other suitable means. The creation of three-dimensional interactive objects and the movements thereof through the three-dimensional space is considered to be known to the average practitioner. A suitable software package for this purpose is World Toolkit. To make the ultimate display of the simulated environment as realistic as possible, it is preferred to select the highest possible resolution for generating the objects maintaining thereby a sufficient mobility and manoeuvrability of the object to obtain also in the simulated environment a true pattern of movements.

After creating a 3D interactive object a mathematical two-dimensional projection thereof is made in the virtual 3D-space and this two-dimensional projection is visually displayed together with the two-dimensional video or film registration of the environment.

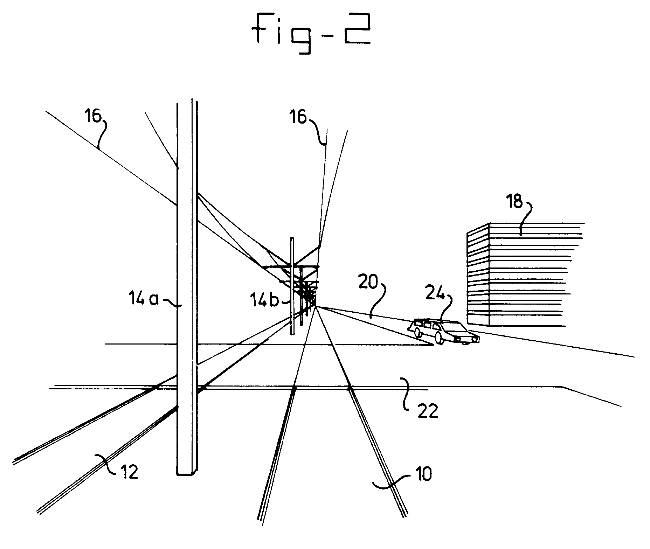

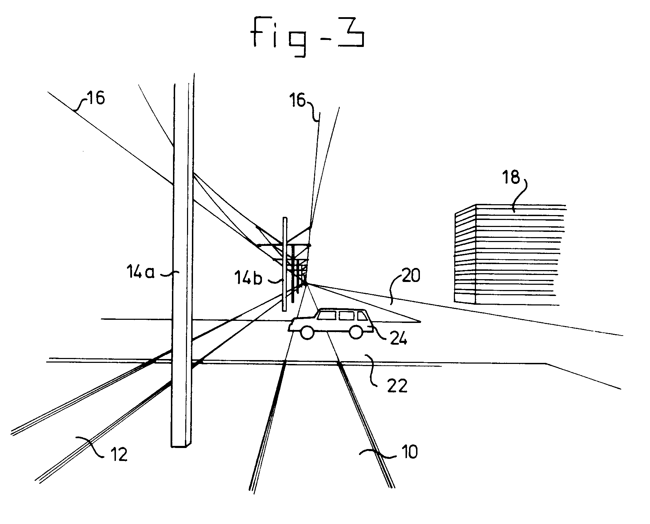

Figure 2 illustrates the result in case in the virtual 3D-space a vehicle is generated as interactive object, which vehicle thereafter as 2D-projection together with the video or film recording is displayed from the same observation point as is assumed in figure 1. In the environment of figure 1 the vehicle 24 will then appear in the correct perspective driving in the opposite direction on road 20. If it is assumed that the observer is not moving (the tram or train on the track 10 is standing for instance at a stop) and if it is furthermore assumed that the vehicle moves to the left and will continue on road 22, then after a short while the display as illustrated in figure 3 will be obtained. The environment is not changed because it was assumed that the observer had come to a standstill, but the two-dimensional representation of the vehicle is changed and corresponds with the image which would be obtained in the realistic situation.

The object which will be obtained in case the vehicle (an interactive dynamical object) moves behind a pole (route object) is created by:
1. a combination of the two-dimensional calculated projections of the vehicle and the pole with the correct perspective,
2. the overlay of these calculated projections on the film, whereby the 3D-coordinates of the camera position will take care that the two-dimensional calculated projection of the pole exactly corresponds with the position of the "real" pole in the film and,
3. the display selection in the film.

The "display selection in the film" can be influences; not every projection of an object has to be displayed in the film. Using prior art techniques display can be prevented by providing the projection within "blue colouring". In the simulator according to the invention the route objects will be given a "blue colouring" resulting in a transparent projection on the film, so that the original video or film image is maintained for the observer. The interactive objects (vehicles, signalling lights, cyclists, pedestrians, etc.) will obtain a visible colour (= non-blue) and are therefore visible to the observer.

Because "blue" becomes invisible also for instance the vehicle windows are blue coloured so that the background behind the vehicle will be visible through the windows thereof. This significantly enhances the sense of reality of the integrated image which is visible for the observer.

It will be clear that a similar series of mathematical projections will be created if the observer is moving (in the direction of the vehicle) in which case the two-dimensional dimensions of the vehicle in the visional display will gradually increase as the distance between the vehicle and the observer decreases.

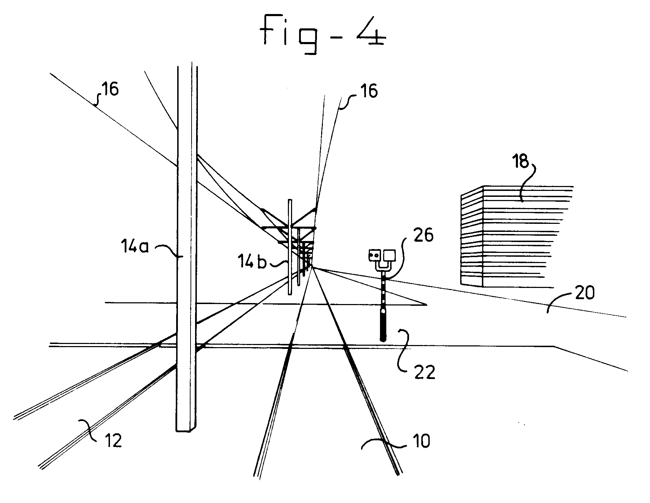

Instead of a vehicle also the signalling light of a consisting signalling pole along the track can be created as an interactive object in the three-dimensional space, whereafter a two-dimensional image thereof can be displayed together with the environment in which the actual signalling pole is present. The result is illustrated in figure 4. The environment is shown from the same standpoint as figure 1 whereby in this case as additional detail the signalling pole 26 is visible at the right-hand side along the track 10. In this case it is possible for instance by using a joystick or using the computer keyword to change the signal displayed by this signalling pole such that the observer has to react thereto in adequate manner.

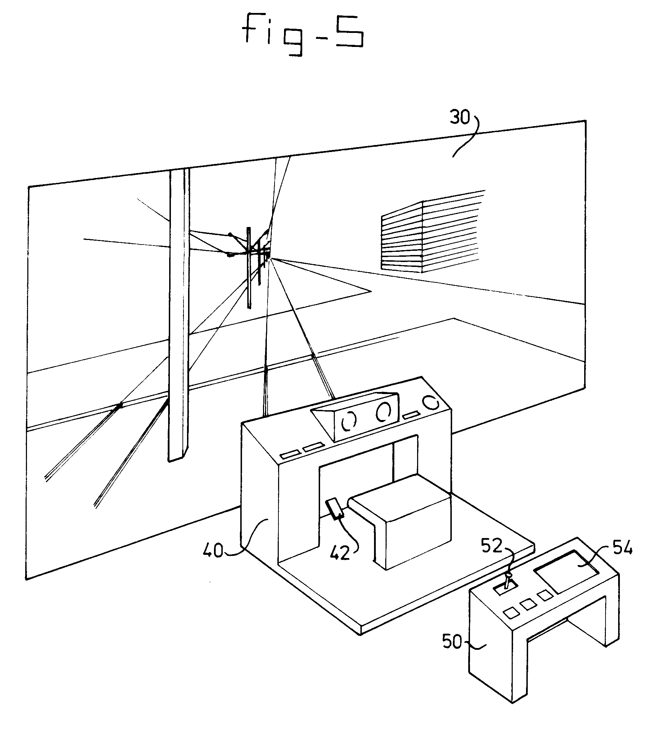

Figure 5 illustrates very schematically a simulator whereby the system according to the invention can be applied. The simulator comprises means, for instance embodied as a projection screen, onto which the environment in combination with interactive objects can be made visible. It is remarked that of all object which are present in the created 3D-space only the interactive dynamical objects are selected to be made visible together with the environment. All other objects present in the 3D-space are in fact projections of parts in the environment which with all details are present on the video or film recording and are therefore preferably made visible within the scope of this recording. Suitable software for supporting the visualization of the environment together with only the interactive objects is commercially available. As an example the attention is drawn to the software package World Toolkit.

Furthermore the simulator comprises a panel 40 which is preferably embodied similar to the operating panel of the vehicle to be simulated. Accompanying this panel is amongst others a foot pedal 42 for influencing the velocity of the vehicle (in the simulator the velocity with which the environment is projected on the screen 30). Furthermore a second panel 50 is present comprising for instance a control screen 54 as well as operational means for influencing the movement of dynamical objects both with respect to velocity as well as with respect to direction. As example a joystick 52 is illustrated in figure 5.

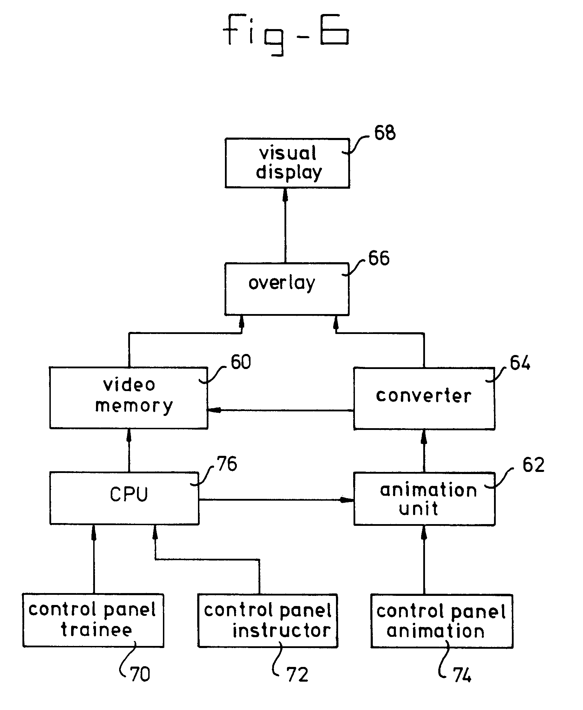

Figure 6 illustrates schematically the composing sections of the simulator shown in figure 5. The simulator comprises a video memory 60 in which the video recordings of the environment are stored. Furthermore, the simulator comprises an animation unit 62 for creating the dynamical objects. The output signals of the animation unit will pass a signal converter 64 and are from there applied to an overlay unit 66, in which, using standard overlay techniques, the signals representing the environment, derived from the memory 60, are combined with the signals representing the dynamical objects derived from the unit 62 such that a realistic image of the real situation is obtained. This image is made visible using the unit 68.

The simulator in figure 6 furthermore comprises a trainee-control panel 70 by means of which the trainee can supply signals with relation to the desired motional behaviour of the simulated vehicle. Another control panel 72 offers the instructor the possibility to influence the behaviour of the vehicle and finally the panel 74 provides the possibility to influence the behaviour of the dynamical objects. In practice the panels 72 and 74 will be combined as is also suggested in figure 5. The panels 70 and 72 apply their signals to a central processor 76 which not only controls the video memory 60 but is also in contact with other sections of the simulator, such as the animation unit 62. As is indicated in the figure there is furthermore a synchronisation connection between the converter 64 and the video memory 60.

It is assumed above that the observer is moving along a predetermined route and in connection therewith the attention is drawn to rail vehicles. However, the above-described technique can be applied with excellent results on routes, which consist only of one single point whereby the observer only has the possibility to look around. In this respect the attention can be drawn to application of the system for instance in an artillery simulator.

## Claims

1. System for simulating the environment of an observer which is able to move through said environment along a predetermined route, comprising:
a) first means enabling the observer to influence the direction and velocity with which the observer moves along said predetermined route,
b) second means for visualizing the environment synchronously with the momentaneous position, direction and velocity of the observer along said route,
characterized in that the system furthermore uses:
c) third means for registering the environment by means of a camera which during the registration moves along said predetermined route,
d) fourth means for defining a three-dimensional virtual space by reconstructing the spatial coordinates of selected objects in the environment which are visible from predetermined positions along said route in the registered environment, based on the dimensions measured in the registration and the corresponding real dimensions which are considered known, and for determining the camera standpoint in the three-dimensional space,
e) fifth means for generating interactive dynamical and/or statical objects in said three-dimensional space,
f) sixth means for constructing a two-dimensional mathematical projection of each generated object from the camera standpoint in the three-dimensional space, and
g) seventh means for combining the two dimensional projections of the interactive objects generated by the sixth means and the two-dimensional environment registered by the third means, which combined data can be used by the display means mentioned under b).

2. System according to claims 1, characterized in that the registration means mentioned under c) use an analogue memory means to memorize the film or video images made by said camera.

3. System according to one of the preceding claims, characterized in that the objects, of which the spatial coordinates are reconstructed in the virtual three-dimensional space by said fourth means consist of identical or mainly identical objects which are located on or alongside said route and of which the dimensions, measurable in the two-dimensional image (for instance the length and width) are known or can be provided.

4. System according to one of the preceding claims, characterized in that the statical interactive objects, which can be generated by the fifth means mentioned under e) are shaped as signalling lights or other means which provide information to the observer and which may have influence on the manner in which the observer manipulates the first means mentioned under a).

5. System according to one of the preceding claims, characterized in that the dynamical interactive objects, which can be generated by said fifth means mentioned under e) are shaped as persons, animals, or vehicles.

6. System according to one of the preceding claims, characterized in that the route consists only of one single point.

7. System according to claim 1, characterized in that the system is applied in a simulator for simulating the environment of an observer, which is located on a railbound vehicle such as a tram, train, etc., whereby the course of the rail determines the above-mentioned route.

8. System according claim 8, characterized in that the system is applied for training the drivers of rail vehicles and comprises for that purpose means, operable by the driver to be trained, for controlling the velocity and direction of the vehicle and further means, operable by an instructor, for controlling the generated dynamical interactive objects in the three-dimensional space.
